# EUROPEAN PATENT APPLICATION

(11) **EP 2 306 656 A2**
(43) Date of publication of application: **06.04.2011**
(21) Application number: 09800573.9
(22) Date of filing: 23.07.2009
(51) Int. Cl.: H04B 1/40

(54) **APPARATUS AND METHOD FOR PROVIDING BOARD GAME SERVICE IN MOBILE TERMINAL**

(30) Priority: 24.07.2008 KR 20080072490
(71) Applicant: Samsung Electronics Co., Ltd., Suwon-si, Gyeonggi-do 442-742 (KR)
(72) Inventor: KANG, Sung-Wouk, Seoul 135-011 (KR); PARK, Hyun-Sun, Seoul 157-861 (KR); GONG, Na-Yeon, Seoul 135-230 (KR)
(74) Representative: Jenkins, Richard Gavin
(86) International application number: PCT/KR2009/004108
(87) International publication number: WO 2010/011092

(57) **Abstract**

An apparatus and a method for providing a board game in a mobile terminal of a mobile communication system is provided. The apparatus includes a display means for displaying a game progress status; a sensing means for sensing a piece, a game board on which the piece moves and a location of movement of the piece on the game board; a memory storing a game program and algorithm for the board game service; and, a controller for controlling the sensing means to sense the location of the piece movement according to the game program stored in the memory, producing game progress information about the location of the piece movement, and controlling the display means to display game results in which the game progress information is applied.

## Description

### 1. Field of the Invention

The present invention relates generally to an apparatus and a method for providing a board game service in a mobile terminal of the mobile communication system, and more particularly to an apparatus and a method for providing a board game by sensing a location of a piece through a mobile terminal.

### 2. Description of the Related Art

In general, a mobile terminal can be carried by an individual for transmission and reception of voice and data communication, at various times and locations. For example, mobile terminals include devices such as a cell phone, a Wireless Access Protocol (WAP) phone (a work analysis program phone), a Personal Digital Assistant (PDA), a web pad, etc. A mobile terminal increases the mobility of a user, with an emphasis on a personal services, leading to a widespread use of mobile terminals.

In addition to voice communication, mobile terminals may also provide an image data transmission/reception service. Other services of a mobile terminal may include a Short Message Service (SMS) ; a voice information service, in which a mobile terminal provider provides voice information regarding news, sports, stocks, weather and etc.; a stock information service provided as a text message; a traffic information service regarding a traffic situation; a Personal Computer (PC) communication search service; an internet service; a fax service; an E-mail service and etc, as well as a service for successful communication and communication quality that is regarded as the most important in using the mobile terminal. Additional services, such as those described above, correspond to a large amount of the communication services for providing the information through a mobile terminal.

Recently, use of a broadcasting service and a service for providing game contents are rapidly and significantly increasing according to the increasing requests of users of the mobile terminals. Specifically, it is possible for a mobile terminal to receive a broadcasting service like a Digital Multimedia Broadcasting (DMB), and to transmit/receive various kinds of video/images, due to improvements in the data transmission rates of mobile terminals.

Further, since a processing rate of a processor in the mobile terminal has been significantly improved, and because users have been increasingly requesting the game service, a mobile terminal manufacturer or a mobile communication provider provides various kinds of the game contents in order to meet these requests. Recently, game phones, which enable users to enjoy games with an increased sense of reality, through means such as 3-D image and sound, for example, have been actively developed.

### SUMMARY OF THE INVENTION

Accordingly, the present invention provides an apparatus and a method for providing a game service through a mobile terminal.

Further, the present invention provides an apparatus and a method for providing a board game service to mobile terminals connected to a network.

Furthermore, the present invention provides an apparatus and a method for providing a board game service wherein a location of a piece on a game board is sensed by means of a mobile terminal.

In accordance with an aspect of the present invention, an apparatus for providing a board game service in a mobile terminal is provided. The apparatus includes a display means for displaying a game progress status; a sensing means for sensing a piece, a game board on which the piece is moved, and a location of movement of the piece on the game board; a memory storing a game program and an algorithm for said board game service; and, a controller for controlling said sensing means to sense the location of the movement according to the game program stored in the memory, producing game progress information about the location of the movement, and controlling the display means to display game results in which the game progress information is applied.

According to another embodiment of the present invention, a method for providing a board game service in a mobile terminal is provided. The method includes generating random number information for moving a piece while the board game is performed; sensing a location of a movement of the piece on a game board according to the generated random number information through a predetermined sensing means; and, producing first game progress information about the piece location and applying the first game progress information to the board game.

According to embodiments of the present invention, a location of the piece on a game board is sensed by means of a mobile terminal, and thus it is possible to play a board game with ease through a game program stored in the mobile terminal.

Further, embodiments of the present invention provide a board game service wherein a number of the mobile terminals form a network, receive/transmit the game progress information according to progress of the board game, and reflect the game information in real time.

Further, embodiments of the present invention provide a board game service in a stand-alone manner, wherein each of mobile terminals distinguishably sense the piece movement of another party as well as the piece movement of the user's own, and then reflects such sensing onto game progress information as a whole.

### BRIEF DESCRIPTION OF THE DRAWINGS

The foregoing and other objects, features and advantages of the present invention will become more apparent from the following detailed description when taken in conjunction with the accompanying drawings in which:
FIG. 1 is a block diagram illustrating a mobile terminal according to a first embodiment of the present invention;
FIG. 2 is a schematic view illustrating sensing of a piece location on a game board through the mobile terminal according to the first embodiment of the present invention;
FIG. 3 is a flow chart illustrating the game process using the game board and the mobile terminal according to the first embodiment of the present invention;
FIG. 4 is a block diagram illustrating a mobile terminal according to a second embodiment of the present invention;
FIG. 5 is a schematic view illustrating sensing of a piece location on a game board through the mobile terminal according to the second embodiment of the present invention;
FIG. 6 is a flow chart illustrating the game process using the game board and the mobile terminal according to the second embodiment of the present invention;
FIG. 7 is a block diagram illustrating a mobile terminal according to a third embodiment of the present invention; and
FIG. 8 is a flow chart illustrating a game process using the mobile terminal according to the third embodiment of the present invention.

### DETAILED DESCRIPTION OF EMBODIMENTS OF THE PRESENT INVENTION

Hereinafter, embodiments of the present invention will be described with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

According to an embodiment of present invention, a board game (which has been widely used in an existing off-line market) is provided through a mobile terminal. Mobile terminals belonging to users are connected to each other through a communication network. Each of the mobile terminals transmits/receives game-related data to/from the other mobile terminal in a manner determined according to the game. Each of the mobile terminals also includes a game program for visibly and/or aurally displaying the status of the game progress. Further, each of the mobile terminals comprises sensing means, such as a sensor, or a digital camera operating in a view-mode to thereby sense the movement of a piece used in the game.

According to embodiments of the present invention, a stand-alone type board game may be supported, in which mobile terminals join the board game, but the connection of the mobile terminal with the network is not required. When performing the board game operating in the stand-alone manner, each of the mobile terminals can sense the piece movement of the user's own piece as well as the piece movement of the other party, and thereby visibly/aurally displaying the status of the game progress.

According to embodiments of the present invention, board games include games for determining a winner and a loser, wherein a value of the piece movement is sought using a random number generator, such as virtual dice installed in the mobile terminal; the piece is moved on a virtual game board or an off-line game board according to the sought value and the determined game rule; and resulting values are accumulated for determining the winner/loser. If an off-line game board is used, the mobile terminal may include a separate sensor for sensing a piece location and applying the sensed game piece information to the game program.

In the following detailed description, several embodiments are described for providing a board game service according to the present invention. In a first embodiment, a mobile terminal includes a senor for sensing the piece location on the game board according to the piece movement, and transmits/receives the game progress information to/from the other network-connected mobile terminals of the other parties, to thereby perform the game. In a second embodiment, a mobile terminal includes a digital camera operating in a view mode so as to sense piece location on a game board according to the piece movement, and transmits/receives the game progress information to/from the other network-connected mobile terminals of the other parties, to thereby perform the game. As described, the first and the second embodiments enable performance the board game while the mobile terminals are connected with a network. However, when the first and the second embodiments support a stand-alone type board game, each of the mobile terminals senses the piece movement corresponding to a user's own piece as well as piece movement corresponding to pieces of the other parties, and reflects the sensing results in the game progress information. Thus, the mobile terminals according to embodiments of the present invention are not required to connect to the network and transmit/receive game progress information.

According to a third embodiment of the present invention, a mobile terminal displays a virtual game board and movement of a virtual piece through a display means and transmits/receives the game progress information to/from the other network-connected mobile terminals of the other parties to thereby perform the game. The above-described first through third embodiments of the present invention are detailed herein below with reference to the drawings.

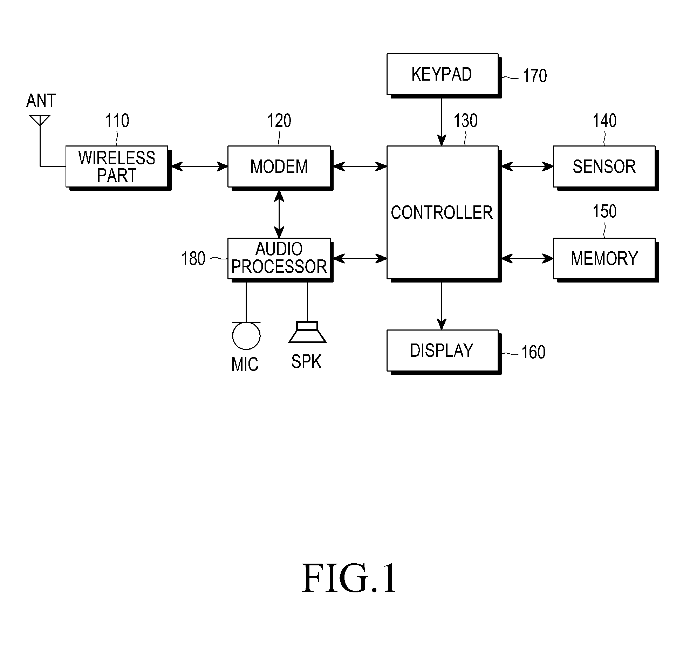

FIG.1 is the block diagram illustrating a mobile terminal according to the first embodiment of the present invention.

Referring to FIG. 1, a wireless part 110 transmits/receives data through an antenna ANT. A modem 120 performs encoding and modulating (or demodulating and decoding) of the data transmitted/received through the wireless part 110. A memory 150 may store game programs enabling a board game, various game rules applied to each of the game programs, and graphic image and sound information corresponding the game programs.

A sensor 140 senses a game board, and shapes, patterns and colors of a game piece to thereby sense the current location of the piece. The game board includes a number of distinguishable areas that allow the piece to move according to determined game rules. In order for the sensor 140 to distinguishably sense the areas of the game board, each of the areas may have sensing material/pigments printed or attached thereon. Also, at a predetermined position corresponding to each of the areas on the game board, any item that can be sensed by the sensor 140 may be included. During operation of the sensor 140, the manner of sensing the piece may be the same as the manner of sensing each of the areas on the game board. Also, technologies such as Radio Frequency IDentification (RF-ID) may be used to sense the piece and each of the areas on the game board according to embodiments of the present invention.

A display 160 visually displays graphic images generated according to the game progress and game results. An audio processor 170 includes a speaker (SPK) outputting sound effects and a microphone MIC. The mobile terminal also includes a keypad 180 for allowing the user to enter key-input requested according to the game.

The memory 150 stores a game program for performing the board game by sensing the pieces and the areas of the game board, game progress information about the game progress performed by different users, and various types of audio/video information to be output while performing the game. The memory 150 also stores a random number generation program (hereinafter, referred to as "a random number generator"), such as virtual dice, which may be used during performance of the board game.

A controller 130 controls the wireless part 110 and the modem 120 in order to allow the mobile terminals of the users to communicate with each other through a network, such as, an Ad-hoc network, a network compliant with a BLUETOOTH® specification, a wireless Local Area Network (LAN), or an Infra-red communication network. The controller 130 drives the random number generator according to the game program stored in the memory 150, and controls the display 160 to display the value of the piece movement, which is generated through the random number generator according to the user's key input. The controller 130 controls the sensor 140 to sense the location of the piece, which is moved by the users on the game board according to said value of the piece movement. The controller 130 produces the game progress information, which is generated according to the sensed location of the piece, and applies the game progress information for displaying the game result. The controller 130 controls the speaker SPK and the display 160 to thereby output sound effects and graphic images, respectively, which are generated according to the game progress.

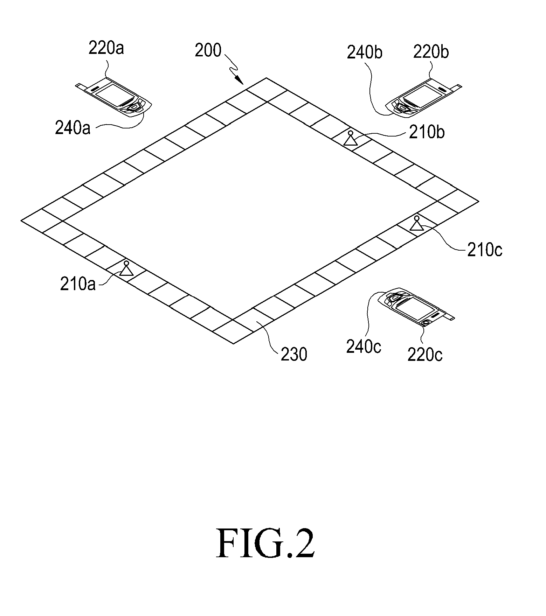

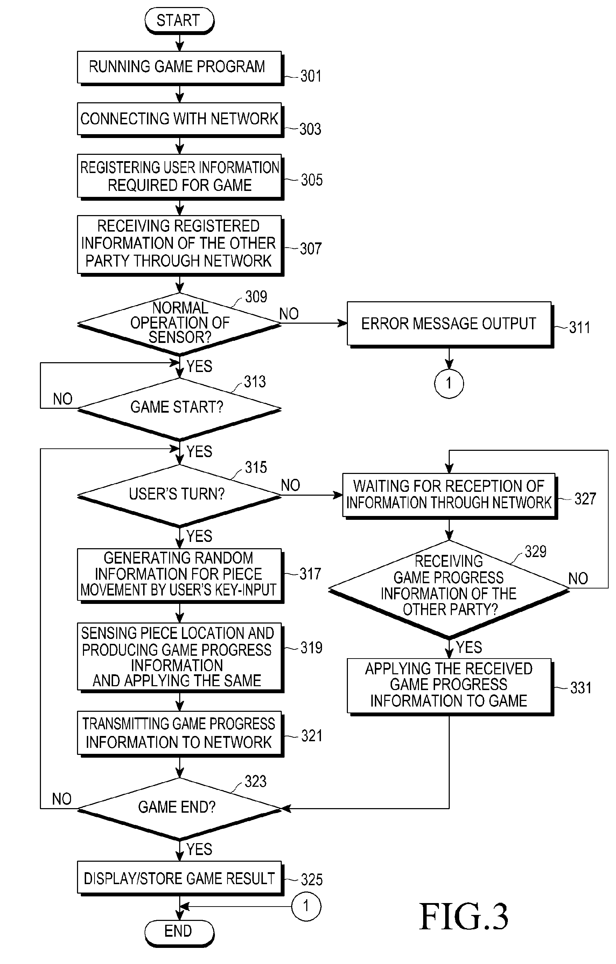

A method of performing the board game according to the first embodiment of the present invention is described as follows with reference to FIGS. 2 and 3, wherein the piece location on the board is sensed through the mobile terminal.

FIG. 2 is a schematic view that illustrates sensing the piece location on the game board through the mobile terminal of FIG. 1. FIG. 3 is a flow chart illustrating a board game process performed in the mobile terminal according to the first embodiment of the present invention.

Referring to FIGs. 1-3, in step 301, the controller 130 runs the game program stored in the memory 150 of the mobile terminals 220a-220c according to a user's key operation. In step 303, the mobile terminals corresponding to users that intend to join the board game, each of which has he configuration illustrated in FIG. 1, are separately connected with the network. Here, the network may be any of wireless networks including wireless LAN, an Infra-red communication network, a network compliant with a BLUETOOTH® specification, and an Ad-hoc network. However, embodiments of the present invention are not limited to these examples. The network connection of the mobile terminals 220a-220c for the board game may be applied to the second and the third embodiments of the present invention in a manner similar to that described above with respect to the first embodiment of the present invention.

In step 305, the controller 130 requests the game user to input user information through the keypad 170 and registers the user information according to a routine of the game program. In step 307, the controller 130 receives the registered information of other parties joining the game from the mobile terminals 220b and 220c through the network to thereby store the information in the memory 150. When completing the registration of the information for the user and the other parties, the controller 130 checks whether the sensor 140 for sensing the piece and the game board runs normally in step 309. If it is determined that the sensor 140 runs abnormally, step 311 is executed in that the controller 130 outputs an error message notifying a malfunction of the sensor 140 through the display 160 and ends the game progress.

However, if it is determined that the sensor 140 runs normally, in step 313, the controller 130 determines whether the game starts, for example, according to whether there is the user's key-input for starting the game. If a user's key-input is not sensed, step 313 is repeated. If the user's key-input is sensed, the controller 130 starts the game according to the game routines and determines whether a current turn is the user's own turn or another party's turn. Although not illustrated in FIG.3, the game order of the users and other parties joining in the game may be arbitrarily decided through the mutual communication between the mobile terminals 220a-220c connected with the network according to the game program, or using the random number generator, such as virtual dice, which may be included in the game program as well.

As a result of step 315, if the controller 130 determines that the current turn is the user's own turn, the controller 317 runs the random number generator, and generates a movement value for moving the piece (hereinafter referred to as "random number information"), which is the output from the random number generator driven according to the user's key-input. In step 319, the controller 130 controls the sensor 140 to sense the location of the piece, which is moved on the game board 200 according to said generated random number information, and then produces game progress information about the corresponding location of the piece to thereby apply the same information to the game. Here, the sensors 240a-240c of the mobile terminals 220a-220c may sense a recognition code, sensing material or sensing item, all of which are installed in, printed on or attached to the pieces 210a-210c and each of the areas on the game board 200, in order to sense the piece location. In order to sense each area 230 on the game board 200 to be distinguished from the other areas and to sense the pieces 210a-210c of the user to be distinguished from the pieces of the other parties, the recognition codes, the sensing materials or the sensing items for the areas the pieces are distinguishably provided.

Application of the game progress information by the controller 130 assumes that the preset game rule is applied to the current location of the piece. In step 321, if it is the mobile terminal's 220a turn in the ongoing game, the controller 130 of the mobile terminal 220a controls transmission of the generated game progress information to the mobile terminals 220b, 220c of the other parties through the network.

In step 323, after transmitting the game progress information to the mobile terminals of the other parties, the controller determines whether the game continues on the basis of the user's key-input. Also, the end of the game may be determined according to a resulting value, such as the user's score obtained during the game progress. If there is the key-input for ending the game in step 323, the controller 130 controls the display 160 to display the information about the game result obtained by that time or to store it in step 325. If to the game continues, step 315 is executed and then each of the steps is repeated. The controller 130 controls the speaker SPK to output predetermined sound effects and controls the display to output the predetermined graphic images according to a game progress situation.

Upon a determination that the current turn is another party's turn, in step 327, the controller 130 waits for the reception of the game progress information from the mobile terminals of the other parties through the network. In step 329, the controller 130 determines whether the game progress information is received from the mobile terminals of the other parties. Upon a determination that the game progress information is received from the other party, in step 331 the received game progress information is applied to the game, and then step 323 is executed to determine whether the game ends. If the game progress information of the other party is not received in step 329, step 327 is executed to wait for the reception of the game progress information.

According to the first embodiment, the operations in steps 303-307, 321 and 327-331, wherein the mobile terminals transmit/receive the information of the users joining in the game and the game progress information by way of the network, may be omitted if the game program stored in the mobile terminal supports a stand-alone type game. When supporting the stand-alone type game, each of the mobile terminals receives the user's information required for the game progress via users' key-input to thereby store the information, and then the mobile terminals distinguishably sense the piece movements of the user and the other parties. The mobile terminal also produces the game progress information corresponding to the user and the other parties, which are generated during the game, applies the same information to the game, and displays the game results.

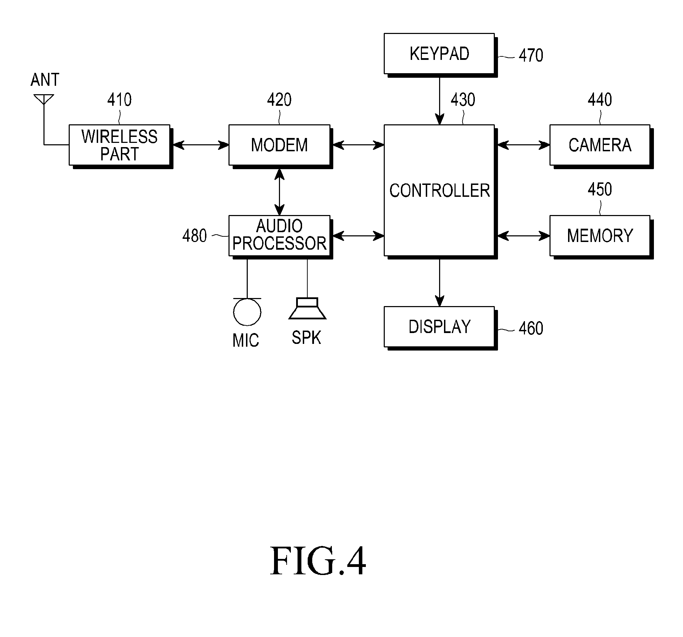

FIG.4 is the block diagram illustrating a mobile terminal according to the second embodiment of the present invention.

Referring to FIG.4, an antenna (ANT), a wireless part 410, a modem 420, a memory 450, a display 460, a keypad 470, an audio processor 480, a microphone MIC and a speaker (SPK) correspond to the antenna (ANT), the wireless part 110, the modem 120, the memory 150, the display 160, the keypad 170, the audio processor 180, the microphone (MIC) and the speaker (SPK), respectively, illustrated in FIG.1.

A camera 440 installed in the mobile terminal operates in a view mode to sense the location of the piece on the game board within a view range. The above-sensed piece location is recognized through a preset algorithm, such a coordinate system, which is stored in the memory 450.

The controller 430 performs functions similar to functions of the controller 130 illustrated in FIG. 1, but the controller 430 uses the digital camera operating 440 in the view mode for sensing the piece location.

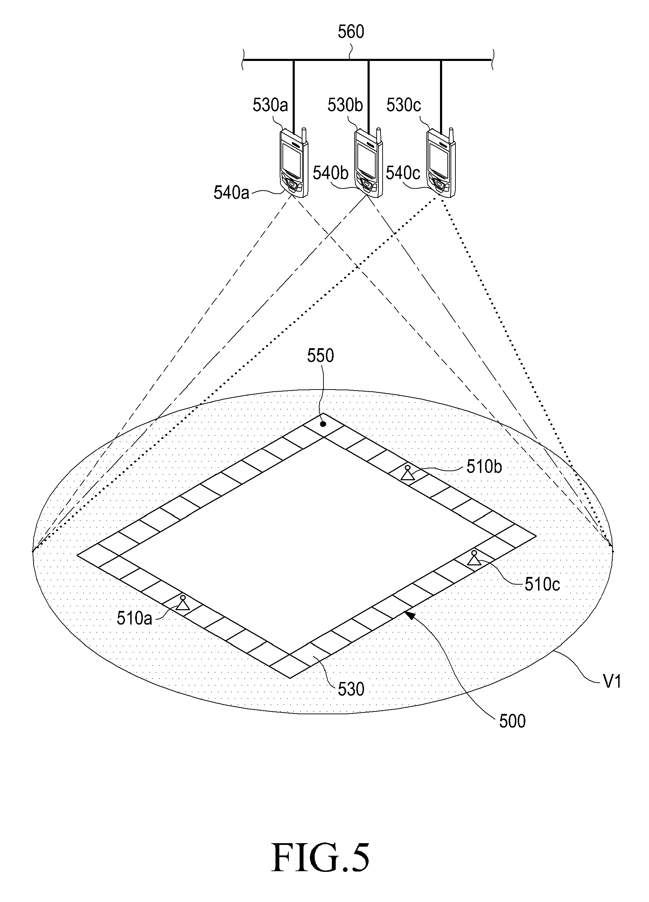

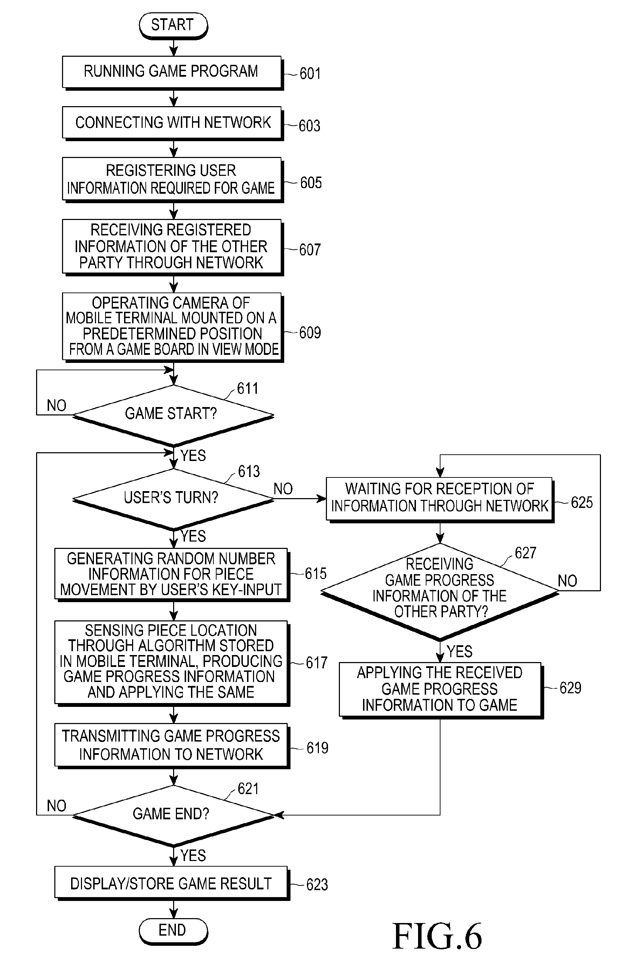

Performance of the board game according to the second embodiment of the present invention is described as follows, with reference to FIGS. 5 and 6, wherein the location of a piece on the game board is sensed through the mobile terminal.

FIG.5 is a schematic view illustrating sensing of the piece location on the game board through the mobile terminal, and FIG.6 is a flow chart illustrating the board game process performed in the mobile terminal according to the second embodiment of the present invention.

In step 601, the controller 430 runs the game program stored in the memory 450 of the mobile terminal 530a according to a user's key manipulation. In step 603, the mobile terminals 530a-530c, which correspond to users that intend to join in the board game, each of which has the configuration illustrated in FIG.4, are separately connected with the network supporting the game program.

In step 605, the controller 430 requests the game user to input user information through the keypad 470 and registers the information according to a defined routine of the game program. In step 607, the controller 430 receives the registered information of the other parties joining in the game from the mobile terminals 530b and 530c of the other parties through the network to thereby store the user information in the memory 450. When completing the registration of the information for the user and the other parities joining in the game, the controller 430 controls the cameras 540a-540c of the mobile terminals, each of which is mounted to a stand 560 at a predetermined position from the game board 500, to operate in the view mode. The stand 560 may be embodied in any of various different forms, such that the cameras 540a-540c of the mobile terminals are able to view the whole region of the game board 500.

In step 611, a determination of whether the game starts is performed according to whether a user's key-input is received. If there is no user's key-input, the operation in step 611 is repeated. However, if the user's key input is received, the controller 430 starts the game according to the routine of the game program and determines whether a current turn is the user's turn or the other party's turn in step 613. Although not illustrated in FIG.6, the game order of the users and the other parties joining in the game may be arbitrarily decided through communication between the mobile terminals 530a-530c connected with the network according to the game program, or the game order may alternatively be decided using a random number generator such as the virtual dice described herein.

As a result of step 613, upon a determination that the current turn is the user's turn, the controller 430 runs the random number generator (not shown), such as the virtual dice provided in the game program, and generates random number information for the movement of the piece, which is output from the random number generator driven by the user's key-input in step 615. In step 617, the controller 430 controls the camera 540a-540c to sense the location of the pieces 510a-510c on the game board, which is moved according to the generated random number information, and produces the game progress information about the movement location to thereby apply the same information to the game. Here, the piece location may be sensed such that each of the areas on the game board 500, which is within the view range of the camera 440 included in the mobile terminal, is distinguished using a coordinate system on the basis of a preset reference point 550. The shapes, the patterns or the colors of the pieces are also recognized in order to determine respective areas on the game board where each of the user's pieces is located.

The application of the game progress information to the game by the controller 430 is based on an assumption that the preset game rule is applied to the current location of the piece. In step 619, if the current turncorresponds to the mobile terminal's 530a in the ongoing game, the controller 430 of the mobile terminal 530a controls transmission of the generated game progress information to the mobile terminals 530b, 530c of the other parties through the network.

In step 621, after transmitting the game progress information to the mobile terminals of the other parties, the controller 430 determines whether the game continues according to the user's key-input. Also, the end of the game may be determined according to a resulting value, such as the user's score obtained during the game progress. If a key-input for ending the game is received in step 621, the controller 430 controls the display 460 to display the information about the game result obtained at that time, or to the controller 430 controls storage of the game result in step 623. Upon a determination to continue the game, step 613 is executed and then each of the steps is repeated. The controller 430 controls the speaker (SPK) to output predetermined sound effects and controls the display 460 to output the predetermined graphic images depending on the game progress situation.

As a result of checking step 613, if it is determined that that the current term belongs to another party's turn, in step 625, the controller 430 waits for the reception of the game progress information from the mobile terminal of the other party through the network. In step 627, the controller 430 determines whether the game progress information is received from the mobile terminals of the other parties. Upon a determination that the game progress information is received from the other party, in step 629, the received game progress information is applied to the game. Then, in step 621 a determination of whether the game ends is performed. If the game progress information of the other party is not received in step 627, in step 625, to the controller 430 waits for reception of the game progress information.

In the second embodiment as described herein above, the operations performed in steps 603-607, 619 and 625-629, wherein the mobile terminals transmit/receive the information of the users joining in the game and the game progress information by way of the network, may be omitted, if the game program stored in the mobile terminal supports a stand-alone type game. When supporting a stand-alone type game, each of the mobile terminals receives the user's information required for the game progress through the user's key-input, and then distinguishably senses the piece movements of the user and the other parties through the cameras of the mobile terminals operating in the view mode. A mobile terminal also produces the game progress information of the user and the other parties, which is generated during the game, applies the same information to the game, and displays game results.

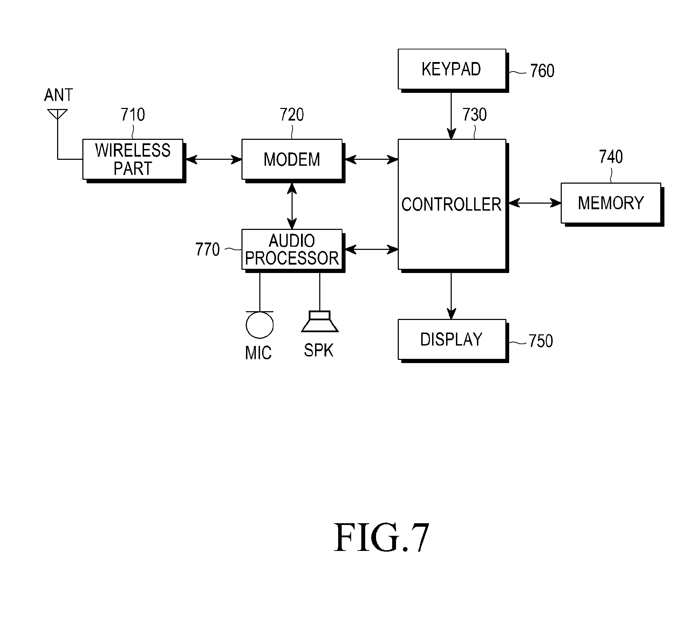

FIG.7 is the block diagram illustrating a mobile terminal according to a third embodiment of the present invention.

Referring to FIG.7, an antenna (ANT), a wireless part 710, a modem 720, a memory 750, a display 750, a keypad 7670, an audio processor 780, a microphone (MIC) and a speaker (SPK) correspond to the antenna (ANT), the wireless part 110, the modem 120, the memory 150, the display 160, the keypad 170, the audio processor 180, the microphone (MIC) and the speaker (SPK), respectively, illustrated in FIG.1.

The controller 730 performs similar functions as the controller 130 illustrated in FIG. 1, but the controller 730 lacks the function of sensing the piece location on the board through the sensor of the controller 130 illustrated in FIG.1.

Performance of the board game through the mobile terminal according to the third embodiment is detailed herein below with reference to FIGS. 5 and 6.

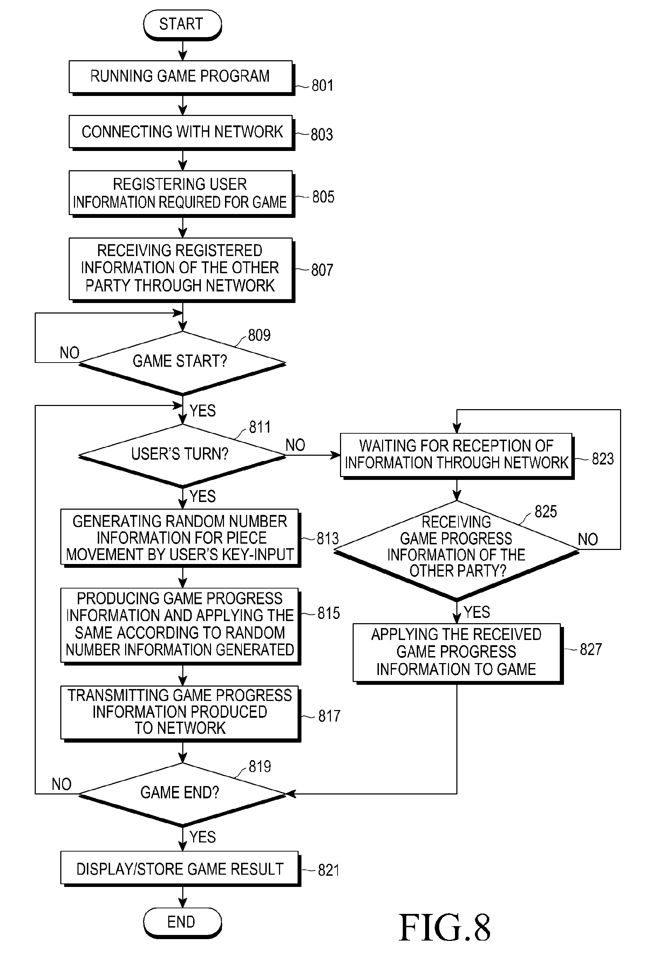

FIG.8 is a flow chart illustrating the board game performed in the mobile terminal according to the third embodiment of the present invention.

Referring to FIG.8, the controller 730 runs the game program stored in the memory 740 according to a user's key manipulation in step 801. In step 803, the mobile terminals corresponding to users that intend to join the board game, each of which has the configuration illustrated in FIG. 7, are separately connected with the network.

In step 805 following step 803, the controller 730 requests the game user to input user information through the keypad 760 and registers the information according to a defined routine of the game program. In step 807, the controller 760 receives the registered information of the other parties joining the game from the mobile terminals 530b and 530c of the other parties through the network to store the information in the memory 740. Upon completing the registration of the information for the user and the other parties joining in the game, a determination whether the game starts is performed according to whether a user's key-input is received in step 809. If the user's key-input is not received, the operation in step 809 is repeated. However, if the user's key input is received, the controller 730 starts the game according to the routine of the game program and determines whether the current turn is the user's turn or another party's turn in step 811. Though not illustrated in FIG.8, the game order of the users and the other parties joining in the game may be arbitrarily decided through communication between the mobile terminals connected with the network according to the game program, or may be decided using the random number generator, such as the virtual dice described herein.

As a result of checking step 811, if the current turn is the user's turn, the controller 730 runs the random number generator (not shown) and generates the random number information for the movement of a virtual piece, which is the output from the random number generator driven by the user's key-input. In step 815, the controller 730 produces game progress information about the location of the virtual piece moved on a virtual game board according to the generated random number information and applies the game progress information to the game. Here, the controller 730 controls the display 750 to display the virtual game board and the movement of the virtual piece, in real time, to let the user monitor the game progress situation.

The application of the game progress information to the game by the controller 730 is under the assumption that the preset game rule is applied to the current location of the piece. In step 817, if the current turn is the mobile terminal's turn, the controller 730 of the mobile terminal controls transmission of the generated game progress information to the mobile terminals of the other parties through the network.

In step 819, after transmitting the game progress information to the mobile terminals of the other parties, the controller determines whether the game continues on the basis of the user's key-input. The end of the game may also be determined according to a resulting value, such as the user's score obtained during the game progress. If a key-input for ending the game is received in step 819, the controller 730 controls the display 750 to display the information about the game result obtained at that time, or to the controller 730 controls storage of the game result in step 821. If the game continues, step 811 is executed and then each of the steps described above is repeated. The controller 730 controls the speaker SPK to output the predetermined sound effects and controls the display 750 to output predetermined graphic images according to the game progress situation.

As result of checking step 811, if it is the other party's turn, step 823 is executed in that the controller 730 waits for the reception of the game progress information from the mobile terminals of the other parties through the network. In step 825, the controller 730 determines whether game progress information is received from the mobile terminal of the other party. Upon a determination that the game progress information is received from the other party, in step 827, the received game progress information is applied to the game. Then, in step 819 a determination of whether the game ends is performed. If the game progress information of the other party is not received in step 825, in step 823, the controller 730 waits for reception of the game progress information.

As described herein above, the present invention makes it possible to sense the location of the piece movement in the board game by means of the sensor or the camera included in the mobile terminal, to transmit/receive the game progress information about the sensed location of the piece to/from the mobile terminals of the other parties connected with the network in real time, and to display the game progress situation through the mobile terminal, so that the user may readily play the conventional off-line board game through the mobile terminal. Although the above-described embodiments assume that a number of mobile terminals are connected with the network and perform the board game, it is possible to perform the stand-alone type board game, wherein each mobile terminal can sense the piece movement of the other parties, while a number of mobile terminals join in the board game, or it is possible to perform the board game allowing only one user to play the game, in the same way as described above by only excluding the function of the network connection.

Although several embodiments of the present invention have been described for illustrative purposes, those skilled in the art will appreciate that various modifications, additions and substitutions are possible, without departing from the scope and spirit of the invention as disclosed in the accompanying claims.

## Claims

1. An apparatus for providing a board game service in a mobile terminal, said apparatus comprising:
a display means for displaying a game progress status;
a sensing means for sensing a piece, a game board on which said piece is moved, and a location corresponding to movement of the piece on the game board;
a memory storing a game program and an algorithm for the board game service; and,
a controller for controlling the sensing means to sense the movement according to the game program stored in the memory, producing game progress information corresponding to the location of the movement, and controlling the display means to display a game result in which the game progress information is applied.

2. The apparatus as claimed in Claim 1, further comprising a network connecting means for communicating with the other mobile terminal,
wherein said controller transmits/receives said game progress information to/from said other mobile terminal and further applies said game progress information to said game result.

3. A method for providing a board game service in a mobile terminal, said method comprises steps of:
generating random number information for moving a piece while the board game is performed;
sensing a location of movement of the piece on a game board according to the generated random number information according to a predetermined sensing means; and,
producing first game progress information about the piece location and applying the first game progress information to the board game.

4. The method as claimed in Claim 3, further comprising, if a number of users join the board game, connecting to other mobile terminals corresponding to the users through a network;
transmitting the first game progress information to the other mobile terminals; and
applying second game progress information to the board game upon receiving the second game progress information from the other mobile terminals.
